# EUROPÄISCHE PATENTSCHRIFT

(11) **EP 0 647 676 B1**
(45) Veröffentlichungstag und Bekanntmachung des Hinweises auf die Patenterteilung: **21.07.1999**
(21) Anmeldenummer: 94115351.2
(22) Anmeldetag: 29.09.1994
(51) Int. Cl.: C08L 45/00, C08L 51/00

(54) **Modifiziertes Cycloolefincopolymer**
Modified cycloolefin copolymer
Copolymère de cyclo-oléfine modifié

(30) Priorität: 06.10.1993 DE 4333997
(43) Veröffentlichungstag der Anmeldung: 12.04.1995
(73) Patentinhaber: Ticona GmbH, 65451 Kelsterbach (DE); MITSUI PETROCHEMICAL INDUSTRIES, LTD., Tokyo (JP)
(72) Erfinder: Hatke, Wilfried, D-65719 Hofheim (DE); Osan, Frank, Dr., D-65779 Kelkheim (DE); Herrmann-Schönherr, Otto, Dr., D-64625 Bensheim (DE)

(56) Entgegenhaltungen:
- DE-A- 2 731 445
- DE-A- 4 202 108
- US-A- 4 104 325

## Beschreibung

Die vorliegende Erfindung betrifft Polymer-Legierungen aus Cycloolefincopolymeren (COC) und Kern-Schale-Partikeln. Diese Polymer-Legierungen zeichnen sich gegenüber dem reinen COC vor allem durch eine verbesserte Reißdehnung, Biegefestigkeit und Schlagzähigkeit aus.

Thermoplastische Cycloolefincopolymere sind in der Literatur hinlänglich beschrieben (EP 203 799, EP 283 164, EP 407 870, EP 485 893, EP 503 422, EP 610 815, EP 610 816, DD 222 317, DD 231 070, DD 246 903, EP 156 464). Sie zeichnen sich durch eine Reihe technologisch wichtiger Eigenschaften wie niedrige Wasseraufnahme, hohe Wärmeformbeständigkeit, hohe Elastizitätsmoduln und hydrolytische Beständigkeit aus.

COC sind somit grundsätzlich für technische Anwendungen geeignet. COC sind jedoch in der Regel spröde und weisen nur eine geringe Schlagzähigkeit, Biegefestigkeit und Reißdehnung auf, was ihre Einsatzmöglichkeiten stark einschränkt.

Aus der DE-A 42 02 108 ist bekannt, daß durch Legieren die Schlagzähigkeit und die Reißdehnung von Polymeren verbessert werden kann. Da sich die mechanischen Eigenschaften von schlagzähen Polymerlegierungen jedoch nicht additiv aus den Eigenschaften der Einzelkomponenten zusammensetzen, ist die Schlagzähmodifikation von Polymeren eine weitgehend empirische Aufgabe, zu deren Lösung es noch weiterer Forschung und Entwicklung bedarf (C.B. Bucknall in Comprehensive Polymer Science, Pergamon Press, 1989, Seite 27-49).

Die Schlagzähigkeit von spröden Polymeren kann verbessert werden durch Legieren mit Polymersystemen, die ganz oder zum Teil aus Kautschuken mit niedrigen Glastemperaturen aufgebaut sind (C.B. Bucknall, Toughened Plastics, Applied Science Publishers, London 1977, Kapitel 4).

Zur Schlagzähmodifikation eignen sich auch sogenannte Kern-Schale-Partikel (Res. Discl. 323, Seite 925-926; DE 4040986, EP 390 144, EP 390 146, EP 4005172, DE 3842796, EP411822, DE 3704657, EP 127407), die als Schlagzähmodifikatoren von z.B. PVC oder PMMA bekannt sind (Gächter/Müller Kunststoff-Additive XXIX; Carl Hanser, München, 1983 und C.B. Bucknall, Rubber-modified Plastics, Comprehensive Polymer Science, Pergamon Press (1989) Seite 34ff). Die schlagzähmodifizierende Wirkung der Kern-Schale-Partikel hängt von einer Vielzahl verschiedener Parameter ab, wie Partikelgröße, Phasenanhaftung an das Matrixpolymer oder Modul.

Eine Voraussetzung zur Erzielung ausreichender Schlagzähigkeiten ist eine gute Phasenanhaftung bzw. Mischbarkeit zwischen Matrixpolymer und dem Kern-Schale-Partikel (D.R. Paul in Encyclopedia of Polymer Science, Vol. 12 (1984) S.437; A.E. Platt in Comprehensive Polymer Science, Pergamon Press N.Y. (1989) S.437), M. Lu et al., Polymer, 34 (1993) S. 1874, M.E. Fowler et al. Polymer 1987, 28, 1703).

Wie alle Polyolefine sind auch COC mit anderen Polymeren schlecht mischbar und weisen somit eine schlechte Phasenanhaftung an andere Polymere auf. Die Verträglichkeit und damit die Phasenanhaftung von Polymeren kann z.B. nach D.W. van Krevelen (Properties of Polymers Elsevier, Amsterdam-Oxford-New York, 1976, Kapitel 7) über den Löslichkeitsparameter Delta abgeschätzt werden. Dabei erhält man für COC Werte von ca. 13,5 J^{1/2}cm^{3/2}. Diese Werte liegen deutlich unterhalb von denen für typische schlagzähmodifizierbare Polymere.

Somit war es zur Schlagzähmodifizierung von COC bislang notwendig diese mit dem kautschukhaltigen Polymer zu vernetzen (JP 92-170 453, JP 92-170 454, JP 92-356 553), um eine gute Phasenanhaftung zu gewährleisten. Eine zuverlässige und reproduzierbare Einstellung der Morphologien und Vernetzungsgrade und der damit verbundenen Schlagzähigkeit und rheologischen Eigenschaften ist mit dieser Vorgehensweise jedoch schwer zu realisieren. Insbesondere hängt die Reproduzierbarkeit der genannten Eigenschaften empfindlich von Parametern wie z.B. Verarbeitungsbedingungen, Vernetzergehalt, Temperatur und Zeit ab.

Darüber hinaus ist bekannt, daß die optimale Partikelgröße d (in Mikrometern) von Kern-Schale-Partikeln für die Schlagzähmodifikation eines spröden Polymers von der Entanglementdichte ne des spröden Polymers nach folgender Beziehung abhängt (S.Wu, Polymer International, 29 (1992) Seite 229-247): log(d) = 1.19 - 14.1 ne. Experimentelle Ergebnisse bestätigen die Gültigkeit dieser Beziehung (Polym. Eng. Sci. 31 (1991) 213; J. Appl. Polym. Sci. 48 (1993) 75). Außerdem ist bekannt, daß bereits für Partikeldurchmesser knapp unterhalb des optimalen Partikeldurchmessers, keine schlagzähmodifizierende Wirkung mehr auftritt (J. Appl. Polym. Sci. 48 (1993) 75).

Bestimmt man nach der von S. Wu angegebenen Beziehung die optimalen Partikeldurchmesser zur Schlagzähmodifikation von COC, so sollten die Kern-Schale-Partikel Durchmesser zwischen 1 und 3 Mikrometer aufweisen. Solche Partikel sind jedoch nach dem jetzigen Stand der Technik industriell nur schwer realisierbar.

Es bestand somit die Aufgabe, die Schlagzähigkeit von COC zu verbessern und dabei die Nachteile des Standes der Technik zu vermeiden.

Es wurde überraschend gefunden, daß Polymer-Legierungen aus COC mit Kern-Schale-Partikeln mit einem Durchmesser unter 0,7 Mikrometer, das gewünschte Eigenschaftsprofil zeigen.

Die vorliegende Erfindung betrifft somit eine Polymer-Legierung, dadurch gekennzeichnet, daß sie enthält a) eines oder mehrere Cycloolefincopolymere und b) einen oder mehrere Typen von Kern-Schale-Partikeln mit einem Durchmesser von 0,01 bis 0,7 Mikrometer, wobei das COC 0,1 - 99 Gew.-% an Struktureinheiten, bezogen auf die Gesamtmasse des COC, enthält die sich ableiten von einem oder mehreren polycyclischen Olefinen der Formeln I, II, III, IV, V oder VI, 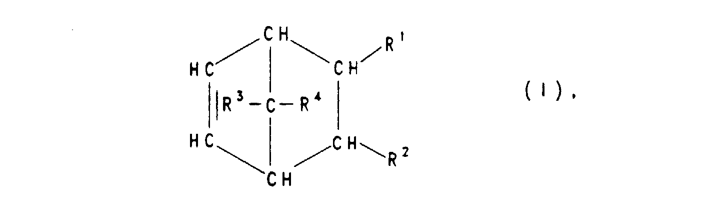 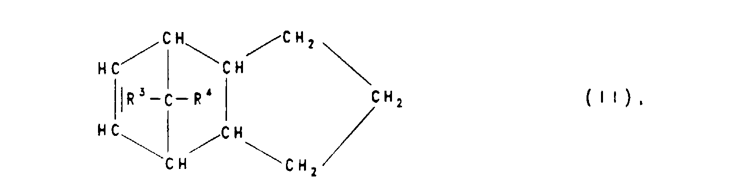 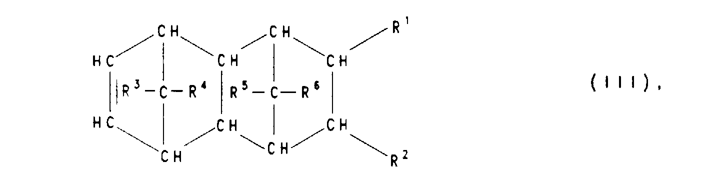 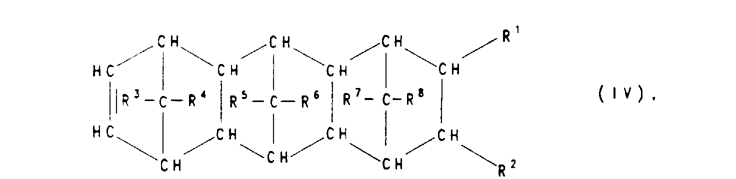 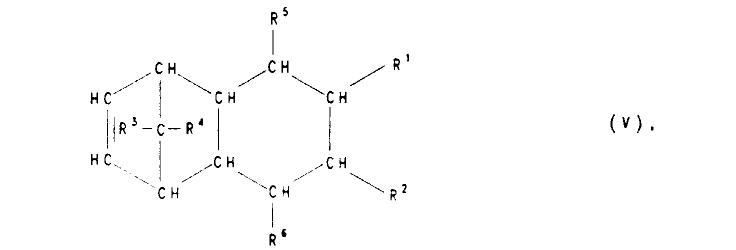 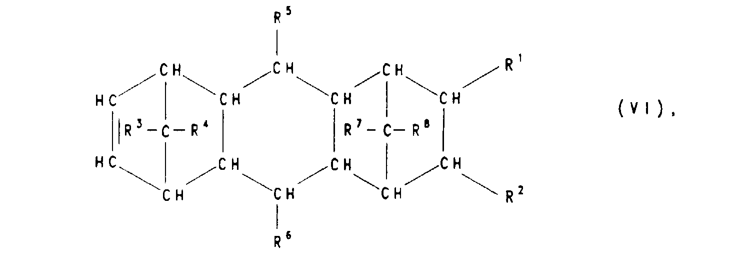 worin R¹, R², R³, R⁴, R⁵, R⁶, R⁷ und R⁸ gleich oder verschieden sind und ein Wasserstoffatom oder einen C₁-C₂₀-Kohlenwasserstoffrest wie einen linearen oder verzweigten C₁-C₈-Alkylrest, C₆-C₁₈-Arylrest, C₇-C₂₀-Alkylenarylrest, einen cyclischen oder acyclischen C₂-C₁₀-Alkenylrest bedeuten, oder zwei oder mehr Reste R¹-R⁸ einen Ring bilden, und die Reste R¹-R⁸ in den verschiedenen Formeln I-VI eine unterschiedliche Bedeutung haben können,
0 bis 95 Gew.-% an Struktureinheiten, bezogen auf die Gesamtmasse des COC, die sich ableiten von einem oder mehreren monocyclischen Olefinen, bevorzugt der Formel VII 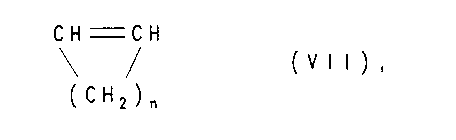 worin n eine Zahl von 2 bis 10 ist, und
0 bis 99 Gew.-%, bevorzugt 0,1 bis 99 Gew.-%, an Struktureinheiten, bezogen auf die Gesamtmasse des COC, die sich ableiten von einem oder mehreren acyclischen Olefinen, bevorzugt der Formel VIII 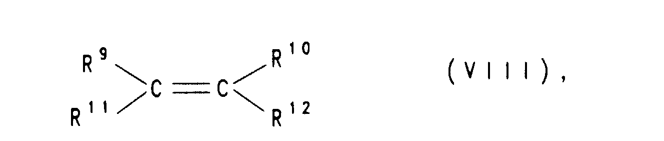 worin R⁹, R¹⁰, R¹¹ und R¹² gleich oder verschieden sind und ein Wasserstoffatom oder C₁-C₂₀-Kohlenwasserstoffrest wie einen C₁-C₈-Alkylrest oder C₆-C₁₄-Arylrest bedeuten.

Bevorzugt enthalten die Cycloolefincopolymere Struktureinheiten, die sich ableiten von einem oder mehreren cyclischen Olefinen, besonders bevorzugt polycyclischen Olefinen der Formeln I oder III, und einem oder mehreren acyclischen Olefinen der Formel VIII, insbesondere α-Olefinen mit 2-20 C-Atomen. Insbesondere sind Cycloolefincopolymere bevorzugt, die Struktureinheiten enthalten, die sich ableiten von einem polycyclischen Olefin der Formel I oder III und einem acylischen Olefin der Formel VIII.

Bevorzugt sind COC, die Struktureinheiten enthalten, die sich ableiten von polycyclischen Olefinen mit Norbornengrundstruktur, besonders bevorzugt Norbornen oder Tetracyclododecen. Bevorzugt sind auch COC, die Struktureinheiten enthalten, die sich ableiten von acyclischen Olefinen mit endständigen Doppelbindungen wie α-Olefinen mit 2-20 C-Atomen, besonders bevorzugt Ethylen oder Propylen. Besonders bevorzugt sind Norbornen/Ethylen-und Tetracyclododecen/Ethylen-Copolymere. Der Anteil der acyclischen Olefine der Formel VIII beträgt 0 bis 99 Gew.-%, bevorzugt 5-80 Gew.-%, besonders bevorzugt 10-60 Gew.-%, bezogen auf die Gesamtmasse des COC.

Die COC werden hergestellt bei Temperaturen von -78 bis 150°C und einem Druck von 0,01 bis 64 bar, in Gegenwart eines oder mehrerer Katalysatoren, welche eine Übergangsmetallverbindung und gegebenenfalls einen Cokatalysator enthalten. Als Übergangsmetallverbindungen eignen sich Metallocene, insbesondere stereorigide Metallocene, und Verbindungen auf Titan- und Vanadiumbasis. Beispiele für Katalysatorsysteme, welche für die Herstellung der für die Zwecke der Erfindung geeigneten COC geeignet sind, sind z.B. beschrieben in EP 203 799, EP 283 164, EP 407 870, EP 485 893, EP 503 422, DD 777 317, DD 231 070.

Beispiele für eingesetzte Übergangsmetallverbindungen sind:
rac-Dimethylsilyl-bis-(1 indenyl)-zirkondichlorid,
rac-Dimethylgermyl-bis-(1-indenyl)-zirkondichlorid,
rac-Phenylmethylsilyl-bis-(1-indenyl)-zirkondichlorid,
rac-Phenylvinylsilyl-bis-(1-indenyl)-zirkondichlorid,
1-Silacyclobutyl-bis (1-indenyl)-zirkondichlorid,
rac-Diphenylsilyl-bis-(1-indenyl)-hafniumdichlorid,
rac-Phenylmethylsilyl-bis-(1-indenyl)-hafniumdichlorid,
rac-Diphenylsilyl-bis-(1-indenyl)-zirkondichlorid,
rac-Ethylen-1,2-bis-(1-indenyl)-zirkondichlorid,
Dimethylsilyl-(9-fluorenyl)-(cyclopentadienyl)-zirkondichlorid,
Diphenylsilyl-(9-fluorenyl)-(cyclopentadienyl)-zirkondichlorid,
Bis(1-indenyl)-zirkondichlorid,
Diphenylmethylen-(9-fluorenyl)-cyclopentadienylzirkondichlorid,
Isopropylen-(9-fluorenyl)-cyclopentadienyl-zirkondichlorid,
Phenylmethylmethylen-(9-fluorenyl)-cyclopentadienyl-zirkondichlorid,
Isopropylen-(9-fluorenyl)-(1-(3-isopropyl)cyclopentadienyl)-zirkondichlorid,
Isopropylen-(9-fluorenyl)(1-(3-methyl)cyclopentadienyl)-zirkondichlorid,
Diphenylmethylen-(9-fluorenyl)(1-(3-methyl)cyclopentadienyl)-zirkondichlorid,
Methylphenylmethylen-(9-fluorenyl)(1-(3-methyl)cyclopentadienyl)-zirkondichlorid,
Dimethylsilyl-(9-fluorenyl)(1-(3-methyl)-cyclopentadienyl)-zirkondichlorid,
Diphenylsilyl-(9-fluorenyl)(1-(3-methyl)cyclopentadienyl)-zirkondichlorid,
Diphenylmethylen-(9-fluorenyl)(1-(3-tert.-butyl)cyclopentadienyl)-zirkondichlorid,
Isopropylen-(9-fluorenyl)(1-(3-tert.-butyl)cyclopentadienyl)-zirkondichlorid,
Isopropylen-(cyclopentadienyl)-(1-indenyl)-zirkondichlorid,
Diphenylcarbonyl-(cyclopentadienyl)-(1-indenyl)-zirkondichlorid,
Dimethylsilyl-(cyclopentadienyl)-(1-indenyl)-zirkondichlorid,
Isopropyien-(methylcyclopentadienyl)-(1-indenyl)-zirkondichlorid und analoge Hafnocene,
Titantetrachlorid, VOCl₃, VOCl₂(OCH₃), VOCl₂(OC₂H₅) und VOCl(OC₂H₅)₂.

Bevorzugt sind dabei:
rac-Dimethylsilyl-bis-(1-indenyl)-zirkondichlorid,
rac-Phenylmethylsilyl-bis-(1-indenyl)-zirkondichlorid,
rac-Phenylvinylsilyl-bis-(1-indenyl)-zirkondichlorid,
rac-Diphenylsilyl-bis-(1-indenyl)-zirkondichlorid,
rac-Ethylen-1,2-bis-(1-indenyl)-zirkondichlorid,
Isopropylen-(cyclopentadienyl)-(1-indenyl)-zirkondichlorid,
Diphenylcarbonyl-(cyclopentadienyl)-(1-indenyl)-zirkondichlorid,
Dimethylsilyl-(cyclopentadienyl)-(1-indenyl)-zirkondichlorid,
Isopropylen-(methylcyclopentadienyl)-(1-indenyl)-zirkondichlorid.

Die für die Zwecke der Erfindung geeigneten COC's weisen Glastemperaturen auf zwischen 50 und 250° C, bevorzugt zwischen 100 und 200° C, besonders bevorzugt zwischen 100 und 150° C.

Die für die Zwecke der Erfindung geeigneten COC weisen Viskositätszahlen (bestimmt in Dekalin bei 135°C) auf zwischen 25 und 200 ml/g, bevorzugt zwischen 40 und 120 ml/g, besonders bevorzugt zwischen 40 und 80 ml/g.

Die in der erfindungsgemäßen Legierung enthaltenen Kern-Schale-Partikel enthalten zwei (Kern und eine Schale) oder mehr (Kern und mehrere Schalen) sich einander abwechselnde Schichten verschiedener Polymere. Gemeinsames Merkmal dieser Partikel ist, daß die einzelnen Schichten aus Polymeren mit unterschiedlichen Glastemperaturen T_{g} bestehen. Polymere mit niedriger Glastemperatur werden dabei als Kautschukphase und Polymere mit hoher Glastemperatur als Hartphase bezeichnet. Die Herstellung solcher Partikel kann z.B. durch Emulsionspolymerisation erfolgen. Eine oder mehrere Schichten können während der Herstellung chemisch vernetzt werden, damit sich Form und Größe des Kern-Schale-Partikels beim anschließenden Legieren mit COC nicht verändern.

Die für die Zwecke der Erfindung geeigneten Kern-Schale-Partikel weisen mittlere Gesamtdurchmesser auf von 0,01 bis 0,7 Mikrometer, bevorzugt von 0,02 bis 0,4 Mikrometer, besonders bevorzugt von 0,05 bis 0,3 Mikrometer.

Als unvernetzte Grundmaterialien für die vernetzten Kautschukphasen kommen Polymersysteme in Frage, deren Glastemperaturen unterhalb von 0°C, bevorzugt unterhalb von -20°C und besonders bevorzugt unterhalb von -40°C liegen. Geeignet sind prinzipiell alle Polymere, die solche Glastemperaturen aufweisen und die zur Synthese von Kern-Schale-Partikeln geeignet sind.

Kern-Schale-Partikel, deren Kautschukphasen besonders niedrige Glastemperaturen T_{g} aufweisen sind besonders geeignet zur Herstellung von Polymer-Legierungen, die für Anwendungen bei tiefen Temperaturen eingesetzt werden.

Die Glastemperaturen der Kautschukphasen lassen sich häufig nicht für sich alleine messen, können aber dadurch ermittelt werden, daß man ein Emulsionspolymerisat der betreffenden Monomerenzusammensetzung herstellt, isoliert, und die Glastemperatur bestimmt. Eine weitere Methode zur Bestimung der Glastemperaturen der Kautschukphasen besteht in der Messung von dynamisch mechanischen Eigenschaften der erfindungsgemäßen Polymer-Legierungen und denen der Matrixpolymeren alleine. Maxima der Verlustfaktorkurven können als Maß für die Glastemperaturen angesehen werden.

Die für die Zwecke der Erfindung geeigneten Kern-Schale-Partikel enthalten Kautschukphasen in Volumen-%, bezogen auf das Gesamtvolumen der Partikel, zwischen 10 und 90, bevorzugt zwischen 20 und 70 und besonders bevorzugt zwischen 30 und 60.

Die für die Zwecke der Erfindung geeigneten Kern-Schale-Partikel enthalten Hartphasen in Volumen-%, bezogen auf das Gesamtvolumen der Partikel, zwischen 90 und 10, bevorzugt zwischen 80 und 30 und besonders bevorzugt zwischen 70 und 40.

Die Herstellung von Kern-Schale-Partikeln ist gut bekannt und zum Beispiel ausführlich beschrieben in US 3,833,682, US 3,787,522, DE 2 116 653, DE 22 53 689, DE 41 32 497, DE 41 31 738, DE 40 40 986, US 3,251,904, DE 33 00 526.

Als Kautschukphase der Kern-Schale-Partikel können Homo- oder Copolymere, bestehend aus zwei oder mehr Monomerentypen verwendet werden. Gemeinsames Merkmal dieser Homo- und Copolymere ist eine Glastemperatur unterhalb von 0°C.

Dabei können sich die Homo- und Copolymere von folgenden Monomeren ableiten:
Konjugierte Dien-Monomere wie Butadien, Isopren, Chloropren, monoethylenische ungesättigte Monomere wie Alkyl- und Arylacrylate, wobei die Alkylreste linear, cyclisch oder verzweigt sein können und die Arylreste wiederum selbst substituiert sein können,
Alkyl- und Arylmethacrylate, wobei die Alkylreste linear, cyclisch oder verzweigt sein können und die Arylreste wiederum selbst substitutiert sein können,
Substituierte Alkyl- und Arylmethacrylate und Acrylate, wobei die Substituenten lineare, cyclische oder verzweigte Alkylreste oder substituierte Arylreste sein können,
Acrylnitrile und substituierte Acrylnitrile (z.B. Methacrylnitril, alpha-Methylenglutarnitril, alpha-Ethylacrylnitril, alpha-Phenylacrylnitril), Alkyl- und Arylacrylamide und substituierte Alkyl- und Arylacrylamide,
   Vinylester und substituierte Vinylester,
   Vinylether und substituierte Vinylether,
   Vinylamide und substituierte Vinylamide,
   Vinylketone und substituierte Vinylketone,
   Vinylhalogenide und substituierte Vinylhalogenide,
   Olefine, mit einer oder mehr ungesättigten Doppelbindungen, wie sie z.B. zur Herstellung von olefinischen Kautschuken Verwendung finden, insbesondere Ethylen, Propylen, Butylen und 1,4-Hexadien sowie vinylaromatische Verbindungen wie Styrol, alpha-Methylstyrol, Vinyltoluol, Halogenstyrole und t-Butylstyrol.

Kautschukphasen auf der Basis von Organopolysiloxanen der nachfolgenden allgemeinen Formel können ebenso für den Aufbau von Kern-Schale-Partikeln verwendet werden, 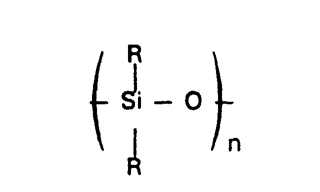 ,wobei R gleiche oder verschiedene Alkyl- oder Alkenylreste mit 1 bis 10 C-Atomen, Arylreste oder substitutierte Kohlenwasserstoffreste bedeutet. Dabei können die Alkylreste und Alkenylreste linear, verzweigt oder cyclisch sein.

Weiterhin können Kautschukphasen auf der Basis von fluorierten monoethylenisch ungesättigten Verbindungen wie Tetrafluoroethylen, Vinylidenfluorid, Hexafluoropropen, Chlortrifluorethylen und Perfluoro(alkylvinylethern) verwendet werden.

Die Kautschukphasen können auch vernetzt sein, wozu sich polyfunktionelle ungesättigte Verbindungen wie sie zum Beispiel in DE 2 116 653, US 3,787,522 und EP 0 436 080 beschrieben sind verwenden lassen. Ebenso in diesen Schriften beschrieben ist die Verwendung von Aufpfropfmonomeren. Diese Verbindungen werden eingesetzt um eine mögliche weitere Schale chemisch an die darunter liegende Phase anzubinden falls dies erwünscht ist.

Zur Erzielung von Polymer-Legierungen mit guter Schlagzähigkeit auch bei tiefen Temperaturen werden Kern-Schale-Partikel bevorzugt, deren Kautschukphasen auf Butadien basieren.

Zur Erzielung von Polymer-Legierungen mit guter Witterungsstabilität werden Kern-Schale-Partikel bevorzugt, deren Kautschukphasen auf Acrylsäureestern basieren.

Kern-Schale-Partikel, deren Kautschukphasen auf Organosiloxanen beruhen, werden bevorzugt, wenn die Polymer-Legierungen gute Schlagzähigkeit bei tiefen Temperaturen, gute Witterungsstabilität und gute Stabilität bei der Herstellung und Verarbeitung aus der Schmelze miteinander vereinen sollen.

Für die Hartphasen der erfindungsgemäßen Kern-Schale-Partikel können Homo-und Copolymere verwendet werden. Die Copolymere können dabei aus zwei oder mehr Monomeren aufgebaut sein. Gemeinsames Merkmal der entsprechenden Homo- und Copolymere ist eine Glasstufe oberhalb von 50° C. Dabei können sich die Homo- und Copolymere von folgenden Monomeren ableiten:
Monoethylenisch ungesättigte Verbindungen, wie
Alkyl- und Arylacrylate, wobei die Alkylreste linear, cyclisch oder verzweigt sein können und die Arylreste wiederum selbst substituiert sein können,
Alkyl- und Arylmethacrylate, wobei die Alkylreste linear, cyclisch oder verzweigt sein können und die Arylreste wiederum selbst substituiert sein können,
substituierte Alkyl- und Arylmethacrylate und Acrylate, wobei die Substituenten lineare, cyclische oder verzweigte Alkylreste oder substituierte Arylreste sein können,
Acrylnitrile und substituierte Acrylnitrile (z.B. Methacrylnitril, alpha-Methylenglutarnitril, alpha-Ethylacrylnitril, alpha-Phenylacrylnitril etc.), Alkyl- und Arylacrylamide,
   Vinylester und substituierte Vinylester,
   Vinylether und substituierte Vinylether,
   Vinylamide und substitutierte Vinylamide,
   Vinylketone und substituierte Vinylketone,
   Vinylhalogenide und substituierte Vinylhalogenide,
   Olefine (z.B. Ethylen, Propylen, Butylen), cyclische Olefine (z.B. Norbornen, Tetracyclododecen, 2-Vinylnorbornen),
   fluorierte monoethylenisch ungesättigte Verbindungen wie Tetrafluoroethylen, Vinylidenfluorid, Hexafluoropropen, Chlortrifluorethylen und
   Perfluoro(alkylvinylether) sowie
vinylaromatische Verbindungen der allgemeinen Formel: 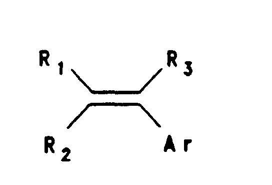 , wobei R₁, R₂, R₃ Wasserstoff, lineare, verzweigte oder cyclische Alkylreste, substituierte bzw. unsubstituierte Arylreste sind, die gleich oder verschieden sein können und Ar einen aromatischen C₆-C₁₈-Rest bedeutet, der zusätzlich noch Substituenten wie Alkyl-, oder Halogenreste tragen kann.

Die Hartphasen können vernetzt sein, wozu sich polyfunktionelle ungesättigte Verbindungen wie sie zum Beispiel in DE 2 116 653, US 3,787,522 und EP 0436 080 beschrieben sind eignen. Ebenso in diesen Schriften beschrieben ist die Verwendung von Aufpfropfmonomeren. Diese Verbindungen werden eingesetzt, um eine mögliche weitere Schale chemisch an die darunter liegende Schale anzubinden, falls dies erwünscht ist.

Als unvernetzte Grundmaterialien für die Hartphasen kommen alle Polymere in Frage mit Glastemperaturen oberhalb von 50°C, bevorzugt oberhalb von 80°C und besonders bevorzugt oberhalb von 100°C.

Die erfindungsgemäße Legierung kann auch kommerziell erhältliche Kern-Schale-Partikel enthalten, beispielsweise
Staphyloid - Typen der TAKEDA Chem. Industries wie z.B. die in JP 17514 oder JP 129266 beschriebenen,
Kane-Ace-Typen der KANEKA, die z.B. beschrieben sind in der Produktbroschüre Kane ACE-B,
Metablen C, Metablen W und Metablen E - Typen der METABLEN Company BV, die beschrieben sind in der Produktbroschüre Metablen,
Blendex - Typen der GE PLASTICS oder
Paraloid-Typen der ROHM and HAAS, die z.B. beschrieben sind in Gächter/Müller Kunststoff-Additive, Carl Hanser München (1983) Seite XXIX ff. oder der Broschüre PARALOID BTA 733, Impact Modifier for Clear Packaging (1987) von Rohm and Haas oder der Broschüre PARALOID BTA-III N2 BTA-702 BTA 715 (1989) von Rohm and Haas.

Die erfindungsgemäßen Polymer-Legierungen enthalten 2 bis 50 Gew.-%, bevorzugt 10 bis 40 Gew.-% und besonders bevorzugt 10 bis 25 Gew.-% Kern-Schale-Partikel, bezogen auf die Gesamtlegierung.

Für die Erzielung einer möglichst hohen Transparenz der Polymer-Legierungen sind Kern-Schale-Partikel mit mittleren Brechungsindizes (Volumenmittelwert) zwischen 1,52 und 1,55, bevorzugt zwischen 1,53 und 1,54 geeignet. Die jeweilige Auswahl optimaler Partikelbrechungsindizes und Radienverhältnisse der Partikel kann bestimmt werden gemäß Makromol. Chem. 183 (1990) 221 für Partikel aus einem Kern und einer Schale bzw. gemäß M.Kerker, The Scattering of Light, Academic Press (1969) Kapitel 5.4 für Mehrschalenpartikel. Insbesondere Kern-Schale-Modifikatoren mit einer Mehrschichtstruktur, die aus einem Kern und mehreren Schalen bestehen, sind besonders geeignet, um transparente schlagzähe Polymer-Legierungen zu erhalten.

Die erfindungsgemäßen Polymer-Legierungen werden hergestellt bei Temperaturen oberhalb der Glastemperatur des COC zwischen 60 und 350°C, bevorzugt zwischen 100 und 150°C und besonders bevorzugt zwischen 110 und 130°C.

Die erfindungsgemäßen Polymer-Legierungen können hergestellt werden durch übliche Verfahren (D.D. Walsh, Comprehensive Polymer Science, Pergamon Press (1989), Kapitel 5.2; J.L. White and K. Min, Comprehensive Polymer Science, Pergamon Press, (1989), Seite 285ff). Insbesondere können die Komponenten in Form von Pulvern oder Granulaten durch gemeinsame Extrusion aus der Schmelze zu Granulaten oder Chips verarbeitet werden, die anschließend in geformte Gebilde überführt werden können, z.B. durch Pressen, Extrudieren oder Spritzgießen. Insbesondere eignet sich die erfindungsgemäße Legierung zur Herstellung spritzgegossener, spritzgeblasener, extrusionsgeblasener oder extrudierter Formkörper. Außerdem können auch Folien und Fasern aus der erfindungsgemäßen Polymer-Legierung hergestellt werden.

Die erfindungsgemäßen Polymer-Legierungen können insbesondere hergestellt werden über sogenannte master batches. Hierbei werden Kern-Schale-Partikel in Mengen von 20 bis 80 Gew.-%, bezogen auf die Gesamtmasse der Legierung, mit einem oder mehreren COC gemischt (bevorzugt durch gemeinsame Extrusion) und anschließend auf die gewünschte Endkonzentration durch erneutes Mischen (bevorzugt durch gemeinsame Extrusion) mit einem oder mehreren COC gebracht. Diese Methode führt zu einer guten Dispergierung der Kern-Schale-Partikel und wird bevorzugt verwendet, wenn Polymer-Legierungen mit Gehalten von 3 bis 25 Gew.-% Kern-Schale-Partikel, bezogen auf die Gesamtmasse der Legierung, hergestellt werden.

Die erfindungsgemäße Polymer-Legierung weist Reißdehnungen von 4 bis 200%, bevorzugt 5 bis 100%, besonders bevorzugt 10 bis 30% und Kerbschlagzähigkeiten von 2,5 bis 100 KJ/m², bevorzugt von 4 bis 50 KJ/m², besonders bevorzugt von 10 bis 30 KJ/m² auf. Sie ist bevorzugt transparent und weist Trübungswerte (gemessen als Haze in % gemäß ASTM D 1003-61) von 2-80%, bevorzugt 2 bis 50%, besonders bevorzugt von 2 bis 25% auf.

Die erfindungsgemäße Polymer-Legierung kann Additive in üblichen Mengen enthalten wie z.B. Plastifiziermittel, UV-Stabilisatoren, optische Aufheller, Antioxidantien, Antistatika, Wärmestabilisatoren oder verstärkende Zusätze wie Glasfasern, Kohlefasern oder Hochmodulfasern wie Polyaramide oder flüssigkristalline Polyester oder ähnliche. Außerdem können sie Füllstoffe wie anorganische Materialien, Talkum, Titandioxid oder ähnliches enthalten.

Die erfindungsgemäße Polymer-Legierung eignet sich für eine Vielzahl von Anwendungen wie Behälter, Flaschen, Getränkebecher, medizintechnische Anwendungen wie Blisterverpackungen oder Spritzgußteile für Anästhesie, Beatmung, Pädiatrie oder medizinische Versorgungseinrichtungen, Haushaltsgüter wie Besteck, Mikrowellengeschirr, Gefrierdosen, Schüsseln, Wannen, insbesondere Badewannen, Wäscheklammern, Klobrillen, Wasserhähne, Möbel, Koffer, insbesondere Schalenkoffer, Blumentöpfe, Deckel und Verschlüsse für Flaschen,
Spielwaren wie Bauklötze oder Tretautos, Extrusionsfolien z.B. für Verpackungen, Kondensatoranwendungen, Abdeckplanen, Bautechnische Anwendungen wie Fensterprofile, Panelen, Falttüren, Jalousien, Fußbodenbeläge, Luftfahrttechnische Anwendungen wie Flugzeuginnenausstattung, Fasern für Textilien, Gehäuse von elektrischen Geräten wie Drucker, Bildschirme, Tastaturen, Rechner, Telefon, HIFI-Geräten, Lampengehäuse, Schlagbohrmaschinen, Bandschleifer, Schwingschleifer, Kreissäge, Anwendungen bei tiefen Temperaturen wie Kühlschrankeinsätze oder Gefrierschrankteile, Kabelummantelungen, Rohre, Sportausrüstungen wie Schutzhelme, Bootsrümpfe, Surfboards, Inneneinrichtungen von Automobilen wie Auskleidungen oder Armaturenbretter, Außeneinrichtungen von Automobilen wie Stoßfänger, Trübeplankung oder Radkappen, Halbzeug wie Dichtungen, Rohrverbinder oder Kabelbinder, optische Anwendungen wie Streuscheiben, Linsen, Berstscheiben, Sichtgläser, Spritzen, Abdeckungen für Sonnenkollektoren, Uhrengläser, Tauchbrillen, CD-Boxen, Kassettenboxen, Scheinwerferabdeckungen, Substrate für LCD-Anzeigen, Folien für Verbundscheiben, Optical Discs, Lichtwellenleiter, transparente Spielwaren, selbstklebende Folien, Büromaterial wie Sichthüllen, Plotterfolien oder Diskettenboxen, Duschkabinen, Brillengestelle, Platten für Überdachungen wie Doppelstegplatten, transparente Schraubendrehergriffe, Visiere, Möbel wie Tische und Stühle.

Die erfindungsgemäße Polymer-Legierung weist eine hohe Biegefestigkeit und eine hohe Spannungsrißbeständigkeit sowie eine gute Schmelzestabilität auf. Sie zeigt eine gute Bindenahtfestigkeit und eine hohe Fließfähigkeit, was insbesondere für Spritzgußanwendungen von Vorteil ist. Die mechanischen Eigenschaften wie z.B. Wärmeformstabilität, Reißdehnung und Kerbschlagzähigkeit lassen sich in weiten Bereichen variieren, so daß vielfältige Anwendungsbereiche zugänglich sind. Außerdem kann die Legierung transparent sein. Die erfindungsgemäße Legierung kann hergestellt werden, ohne daß eine in aufwendigen Tests vorzunehmende Optimierung der Kern-Schale-Partikel für das COC notwendig ist. Außerdem ist die Verarbeitung der Legierung technisch einfach durchzuführen.

### Beispiele

Die Cycloolefincopolymere und Kern-Schale-Partikel wurden zunächst getrocknet (90°C, 24h, verminderter Druck) und anschließend in verschiedenen Gewichtsverhältnissen in einem Extruder (Firma Haake, Rheocord System 90 / Rheomex TW 100, Karlsruhe, Deutschland) unter Schutzgas (Argon) gemeinsam extrudiert. Die in Form von Granulat erhaltenen Polymer-Legierungen wurden erneut wie oben angegeben getrocknet und anschließend unter Schutzgas (Argon) zu Zugstäben, Schlagstäben und Platten spritzgegossen. Es wurde eine Spritzgußmaschine KM 90-210 B der Firma Krauss - Maffei, München, Deutschland benutzt. Physikalische Eigenschaften der Cycloolefincopolymere und deren Polymer-Legierungen wurden wie folgt charakterisiert.

Glastemperaturen wurden unter Verwendung eines Differentialkalorimeters DSC 7 der Firma Perkin Elmer, Überlingen, Deutschland bestimmt. Die Heizrate betrug 20° C/min.

Zur Bestimmung mechanischer Eigenschaften wie Elastizitätsmoduln, Reißdehnungen und Zugfestigkeiten gemäß DIN 53455 (Zug - Dehnungs - Eigenschaften) wurde eine Zug-Dehnungs-Maschine 4302 der Firma Instron, Offenbach, Deutschland eingesetzt.

Kerbschlagzähigkeiten wurden mittels eines instrumentierten Schlagpendels 5102 der Firma Zwick, Ulm, Deutschland gemäß DIN 53453 gemessen.

Schmelzviskositäten wurden bestimmt unter Verwendung eines Rheometers RDS der Firma Rheometrics, Piscataway, NJ, USA.

Viskositätszahlen der verwendeten COC wurden gemäß DIN 53728 bestimmt (Dekahydronaphtalin, 135°C).

3-Punkt-Biegeversuche wurden gemäß DIN 53452/53457 an spritzgegossenen Prüfkörpern durchgeführt.

Optische Eigenschaften wie die Trübung, die totale Lichtdurchlässigkeit und die diffuse Durchlässigkeit wurden an 2mm dicken spritzgegossenen Platten gemäß ASTM D 1003 bestimmt.

Es wurden folgende, kommerziell von der Firma Rohm und Haas (Frankfurt, Deutschland) erhältliche Kern-Schale-Partikel verwendet:
Paraloid EXL 3647^{(R)} (Partikeldurchmesser: 0,3 Mikrometer),
Paraloid EXL 2600^{(R)} (Partikeldurchmesser: 0,1 Mikrometer) und
KANE ACE B 582 von Kaneka (Partikeldurchmesser: 0,1 Mikrometer).

### Polymerisationen

### Beispiel 1

Ein sauberer und trockener 75 dm³ Polymerisationsreaktor mit Rührer wurde mit Stickstoff und dann mit Ethylen gespült und mit 12 kg Norbornen und 15 dm³ Toluol gefüllt. Es wurden 300 ml Triisobutylaluminiumlösung (20 % w/w in Toluol) zugegeben. Der Ethylendruck wurde auf 18 bar Überdruck eingestellt. Die Reaktionstemperatur wurde auf 70°C eingestellt. 20 mg Isopropenyl(cyclopentadienyl)(1-indenyl)-zirkondichlorid wurden in 500 ml einer toluolischen Methylaluminiumoxanlösung (10 Gew.-% Methylaluminoxan mit Molmasse 1300 g/Mol nach kryoskopischer Bestimmung) gelöst und anschließend in den Reaktor dosiert. Der Ethylendruck wurde durch Nachdosieren bei 18 bar gehalten. Nach 90 Minuten Polymerisationszeit wurde der Reaktorinhalt in einen 150 dm³ Rührkessel abgelassen, in dem 500 g Celite und 200 ml Wasser in 50 dm³ einer hydrierten Dieselölfraktion (Exxsol, Siedebereich 100 bis 120°C von Exxon) vorgelegt wurden. Bei 60°C wurde 20 Minuten gerührt.
Auf dem Filtergewebe einer 120 dm³ Drucknutsche wurde ein Filterkuchen aus 500 g Celite suspendiert in 10 dm³ Exxsol aufgebaut. Die Polymerlösung wurde über die Drucknutsche filtriert. Über der Lösung wurde ein Stickstoffdruck von 2,8 bar aufgebaut.
Anschließend wurde über sieben Filterkerzen (Fluid Dynamics, Dynalloy XS 64,5 µm 0,1 m²/Kerze) die in einem Stahlgehäuse montiert wurden, filtriert. Die Polymerlösung wurde mittels eines Dispergators (Ultraturrax) in 500 dm³ Aceton eingerührt und dabei gefällt. Die Suspension wurde über eine 680 dm³ Rührdrucknutsche bei geöffnetem Bodenventil im Kreis gefördert. Nach Schließen des Bodenventils wurde dreimal mit 200 dm³ Aceton gewaschen. Das Produkt wurde nach der letzten Wäsche im Stickstoffstrom bei 60°C vorgetrocknet und im Trockenschrank 24 Stunden bei 0,2 bar und 80°C getrocknet. Es wurden 5,37 kg Polymer erhalten. Die VZ betrug 51 ml/g und die Glastemperatur 105°C.

### Beispiel 2 bis 9

Durch Variation der Reaktionsbedingungen wurden analog Beispiel 1 unter Verwendung unterschiedlicher Metallocene verschiedene Cycloolefincopolymere aus Norbornen bzw. Tetracyclododecen und Ethylen hergestellt (Tabelle 1.1). Die Eigenschaften der Produkte sind in Tabelle 1.2 aufgeführt. Zur Molekulargewichtsregelung wurden bei Beispiel 4 und 5 jeweils 900 ml Wasserstoff vorgelegt. Der verbrauchte Wasserstoff wurde durch Nachdosieren ersetzt (700 ml/h im Beispiel 4, bzw. 800 ml/h im Beispiel 5).

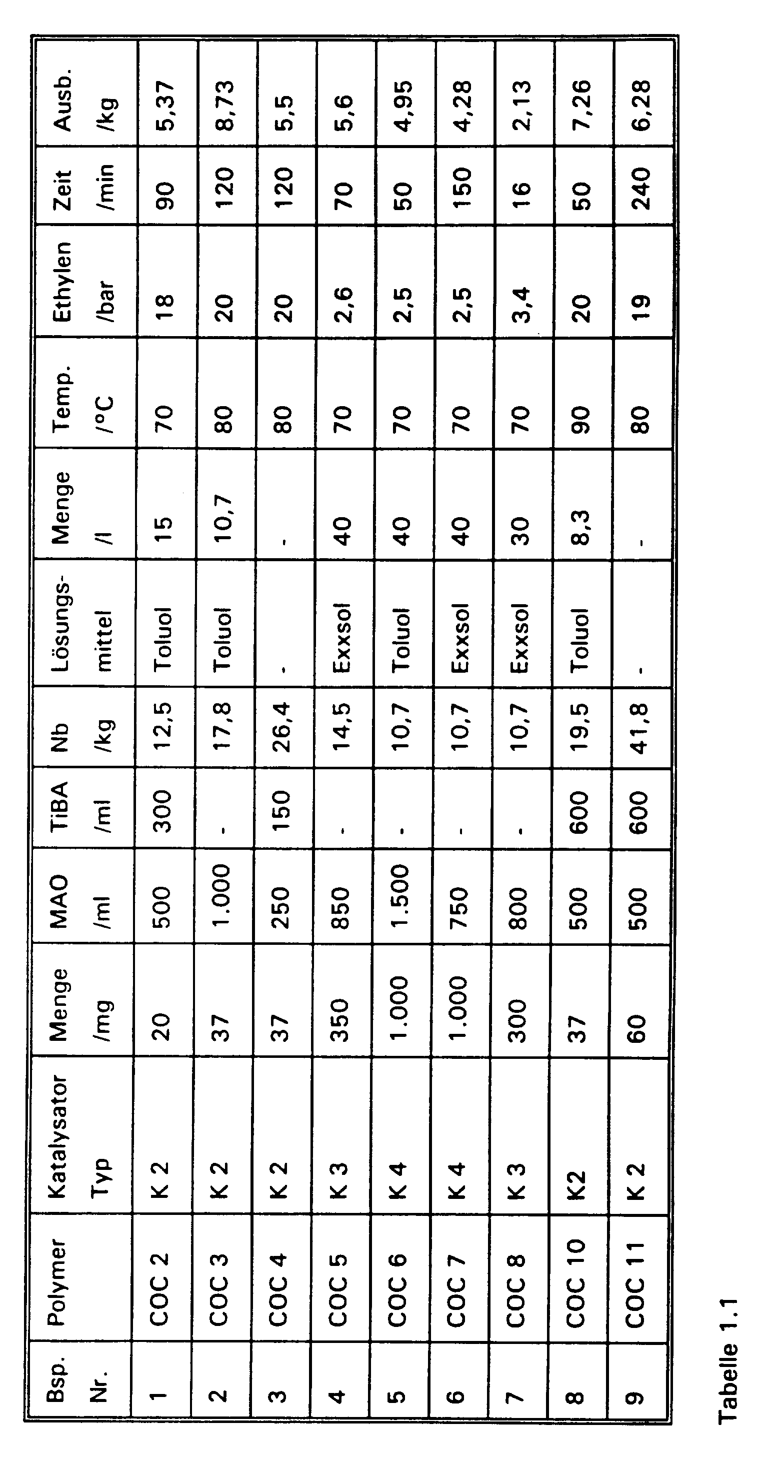

COC1 (Apel 6015) und COC9 (Apel 7515) sind kommerziell erhältliche Produkte der Firma Mitsui Petrochemical.

**Tabelle 1.2**

| Polymer | Katalysator | Glastemperatur (°C) | Viskositätszahl ml/g | Monomere |
|---|---|---|---|---|
| COC 1 | K1 | 150 | 60 | DMON, Et |
| COC 2 | K2 | 105 | 51 | Nb, Et |
| COC 3 | K2 | 120 | 52 | Nb, Et |
| COC 4 | K2 | 145 | 67 | Nb, Et |
| COC 5 | K3 | 159 | 70 | Nb, Et |
| COC 6 | K4 | 135 | 65 | Nb, Et |
| COC 7 | K4 | 150 | 110 | Nb, Et |
| COC 8 | K3 | 150 | 135 | Nb, Et |
| COC 9 | K1 | 150 | 75 | DMON, Et |
| COC 10 | K2 | 131 | 58 | Nb, Et |
| COC 11 | K2 | 135 | 61 | Nb, Et |
| K1: VOCl₂(OC₂H₅) K2: Isopropylen (1-indenyl) cyclopentadienylzirkondichlorid K3: Diphenylmethylen (1-fluorenyl) cyclopentadienylzirkondichlorid K4: Dimethylsilyl bis (1-indenyl) zirkondichlorid DMON: Tetracyclododecen Nb: Norbornen Et: Ethylen | | | | |

### Messungen

### Beispiel 10:

Die nachfolgenden Tabellen stellen die Kerbschlagzähigkeiten von reinen COC und COC/Kern-Schale-Partikel-Polymer-Legierungen zusammen:

**Tab. 10.1:**

| Kerbschlagzähigkeiten in kJ/m² reiner COC | |
|---|---|
| COC 1 | 2.1 |
| COC 2 | 1.8 |
| COC 3 | 1.9 |
| COC 4 | 2.0 |
| COC 5 | 2.0 |
| COC 6 | 2.1 |

**Tab. 10.2:**

| Kerbschlagzähigkeiten in kJ/m² COC/Kern-Schale-Partikel-Legierung | | | |
|---|---|---|---|
| COC | Kern-Schale-Partikel | Gew. % Kern-Schale-Partikel | Kerbschlagzähigkeit |
| COC 1 / | EXL 2600 | 20 | 2.9 |
| COC 1 / | EXL 3647 | 20 | 3.3 |
| COC 2 / | EXL 3647 | 15 | 6.5 |
| COC 2 / | EXL 3647 | 20 | 8.1 |
| COC 2 / | EXL 3647 | 25 | 8.1 |
| COC 2 / | EXL 2600 | 20 | 4.9 |
| COC 3 / | EXL 3647 | 20 | 6.9 |
| COC 4 / | EXL 3647 | 20 | 4.1 |

### Beispiel 11

Die nachfolgenden Tabellen stellen die Zug - Dehnungs - Eigenschaften von reinem COC und COC/Kern-Schale-Partikel-Polymer-Legierungen zusammen.

**Tab. 11.1:**

| Zug - Dehnungs - Eigenschaften reiner COC | | | |
|---|---|---|---|
| COC | Modul (GPa) | Reißdehnung (%) | Zugfestigkeit (MPa) |
| COC 1 | 3.02 | 3.1 | 58 |
| COC 2 | 3.13 | 2.6 | 60 |
| COC 3 | 3.15 | 2.7 | 61 |
| COC 4 | 3.18 | 2.7 | 64 |
| COC 5 | 3.43 | 2.5 | 40 |
| COC 6 | 3.16 | 3.1 | 63 |
| COC 10 | 3.05 | 2.7 | 63 |

**Tab. 11.2:**

| Zug - Dehnungs - Eigenschaften von COC/Kern-Schale-Partikel-Polymer-Legierungen | | | | | |
|---|---|---|---|---|---|
| COC | Kern-Schale-Partikel | Gew.-% Kern-Schale-Partikel | Modul (GPa) | Reißdehnung (%) | Zugfestigkeit (MPa) |
| COC 1 | EXL 2600 | 20 | 2.14 | 5.4 | 47 |
| COC 1 | EXL 3647 | 20 | 2.19 | 4.5 | 47 |
| COC 2 | EXL 3647 | 15 | 2.30 | 14.0 | 44 |
| COC 2 | EXL 3647 | 20 | 2.09 | 11.3 | 41 |
| COC 2 | EXL 3647 | 25 | 1.85 | 23.0 | 35 |
| COC 2 | EXL 2600 | 20 | 2.05 | 12.0 | 42 |
| COC 3 | EXL 3647 | 20 | 2.17 | 10.5 | 42 |
| COC 4 | EXL 3647 | 20 | 2.35 | 7.0 | 29 |
| COC 5 | EXL 3647 | 20 | 2.54 | 3.0 | 38 |
| COC 10 | EXL 2600 | 10 | 2.58 | 7.6 | 55 |
| COC 10 | EXL 2600 | 20 | 2.16 | 10.1 | 45 |
| COC 11 | B 582 | 20 | 2.10 | 25.0 | 41 |

### Beispiel 12:

Die totale Lichtdurchlässigkeit für weißes Licht wurde mittels einer Ulbricht - Kugel an 2 mm dicken spritzgegossenen Platten bestimmt. Es ergaben sich folgende Werte.

**Tab. 12:**

| Totale Lichtdurchlässigkeit in % | | | |
|---|---|---|---|
| COC | Kern-Schale-Modifikator (20 Gew. %) | Totale Lichtdurchlässigkeit in % | Trübung in % |
| COC 3 | EXL 3647 | 81 | 74 |
| COC 4 | EXL 3647 | 77 | 73 |
| COC 11 | B 582 | 99 | 22 |

### Beispiel 13:

Unter Verwendung von spritzgegossenen Platten wurden Schmelzviskositäten als Funktion der Meßfrequenz w, der Temperatur T und der Zeit der thermischen Belastung t bestimmt. Die nachfolgende Tabelle zeigt, daß die erfindungsgemäßen Polymer-Legierungen, eine gute Schmelzstabilität besitzen.

**Tab. 13.1:**

| Schmelzviskositäten einer Legierung aus 80 % COC 4 und 20 % EXL 3647 | | | |
|---|---|---|---|
| T = 260°C | | | |
| t/min | w = 10/s | w = 100/s | w= 460/s |
| 5 | 3750 | 1186 | 448 |
| 15 | 3793 | 1190 | 448 |
| 30 | 3876 | 1199 | 449 |

| T = 300°C | | | |
|---|---|---|---|
| t/min | w = 10/s | w = 100/s | w = 460/s |
| 5 | 1412 | 474 | 213 |
| 15 | 1511 | 482 | 214 |
| 20 | 1634 | 499 | 222 |

### Beispiel 14:

**Tab. 14:**

| Biegeeigenschaften von COC/Kern-Schale-Partikel-Polymer-Legierungen | | | | |
|---|---|---|---|---|
| COC | Kern-Schale-Partikel (20 Gew.-%) | E-Modul (MPa) | Biegefestigkeit (MPa) | Bruchspannung (MPa) |
| COC 1 | EXL 3647 | 2216 | 69.1 | ohne Bruch |
| COC 1 | EXL 2600 | 2117 | 71.3 | ohne Bruch |
| COC 2 | EXL 2600 | 2014 | 60.8 | ohne Bruch |
| COC 2 | EXL 3647 | 2074 | 67.6 | ohne Bruch |
| COC 3 | EXL 3647 | 2121 | 69.3 | ohne Bruch |
| COC 4 | EXL 3647 | 2349 | 83.2 | ohne Bruch |
| COC 5 | EXL 3647 | 2518 | | 75.1 |
| COC 11 | B 582 | 2155 | 79.4 | ohne Bruch |

### Beispiel 15:

Es wurden die zur Erzielung optimaler Schlagzähigkeiten von COC's erforderliche Partikelgrößen d aus Entanglementdichten ne nach folgender Formel berechnet (S.Wu Polymer International 29 (1992) 229-247):
log(d) = 1.19 - 14.1 ne,
d in Mikrometer, ne in mmol/cm³

Entanglementdichten ne wurden wie folgt berechnet, wobei R für die Gaskonstante, T für die Messtemperatur von 480K und G_{N}⁰ für den Plateaumodul stehen: ne = G_{N}⁰ / RT.

Plateaumoduln G_{N}⁰ wurden mit der von S.Wu und R. Beckerbauer (vgl. hierzu Polymer 33 (1992) 509; J.Polym.Sci.Phys.Edn. 27 (1989) 723; Polym.Eng.Sci 28 (1988) 538) angegebenen Methode bestimmt. Dazu wurden bei 480 K linear viskoelastische dynamische Modulspektren (unter Verwendung eines Rheometers RDS der Firma Rheometrics, Piscataway, NJ, USA) als Funktion der Frequenz gemessen. Der Plateaumodul ist dabei nach S.Wu und R. Beckerbauer derjenige Speichermodul G', bei dem der tanδ ein Minimum annimmt: G_{N}⁰ = (G')_{tanδ - Minimum}, mit tanδ = G"/ G'.

**Tabelle 15**

| COC | G_{N}⁰ (10⁵Pa) | ne (mmol/cm³) | d(Mikrometer) |
|---|---|---|---|
| COC 7 | 2.9 | 0.083 | 1.05 |
| COC 8 | 1.8 | 0.051 | 2.96 |
| COC 9 | 2.3 | 0.065 | 1.88 |

### Beispiel 16:

Es wurde wie oben beschrieben Granulat hergestellt mittels Extrusion der Zusammensetzung 80 Gew. % COC 4 und 20 Gew. % Paraloid EXL 2600. Diese Granulate wurden wie oben beschreiben getrockent und zu Folien mit einer Dicke von 20 Mikrometern und einer Breite von 10 cm extrudiert. Aus den Folien wurden parallel und senkrecht zur Extrusionsrichtung Streifen ausgeschnitten. Diese Streifen zeigten folgende mechanische Eigenschaften.

**Tabelle 16**

| Modul (GPa) | Reißdehnung (%) | Zugfestigkeit (MPa) | Zugrichtung |
|---|---|---|---|
| 2.03 | 22.0 | 45 | parallel zur Extrusionsrichtung |
| 1.77 | 16.5 | 43 | senkrecht zur Extrusionsrichtung |

### Beispiel 17

Es wurden im Gewichtsverhältnis 50 zu 50 folgende Polymere in einem HaakeExtruder vermengt: COC2/PMMA, COC5/PMMA, COC9/PMMA, COC2/Polystyrol, COC5/Polystyrol, COC9/Polystyrol, COC2/Polycarbonat, COC5/Polycarbonat, COC9/Polycarbonat.
In allen Fällen wurden mittels DSC-Messungen (Perkin Elmer DSC-7 Überkingen Deutschland) die unveränderten Glastemperaturen der beiden Komponenten gefunden.

## Patentansprüche

1. Polymer-Legierung, dadurch gekennzeichnet, daß sie enthält a) eines oder mehrere Cycloolefincopolymere und b) einen oder mehrere Typen von Kern-Schale-Partikeln mit einem Durchmesser von 0,01 bis 0,7 Mikrometer, wobei
das Cycloolefincopolymer enthält 0,1 - 99 Gew.-% an Struktureinheiten, bezogen auf die Gesamtmasse des Cycloolefincopolymeren, die sich ableiten von einem oder mehreren polycyclischen Olefinen,
0 bis 95 Gew.-% an Struktureinheiten, bezogen auf die Gesamtmasse des Cycloolefincopolymeren, die sich ableiten von einem oder mehreren monocyclischen Olefinen,
0 bis 99 Gew.-% an Struktureinheiten, bezogen auf die Gesamtmasse des Cycloolefincopolymeren, die sich ableiten von einem oder mehreren acyclischen Olefinen, wobei das Cycloolefincopolymer enthält
0,1 - 99 Gew.-% an Struktureinheiten, bezogen auf die Gesamtmasse des Cycloolefincopolymeren, die sich ableiten von einem oder mehreren polycyclischen Olefinen der Formeln I, II, III, IV, V oder VI 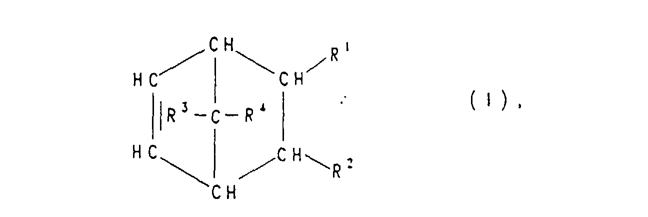 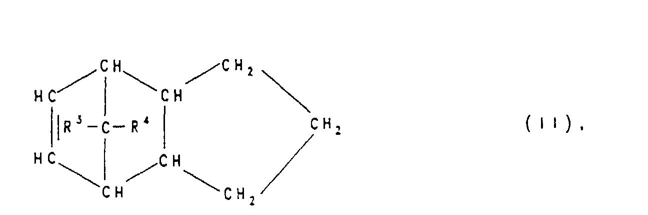 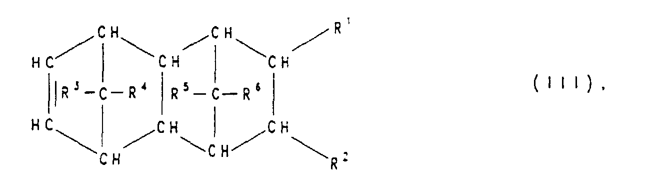 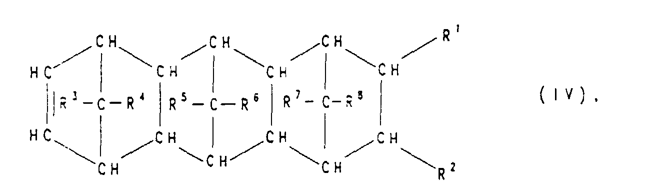 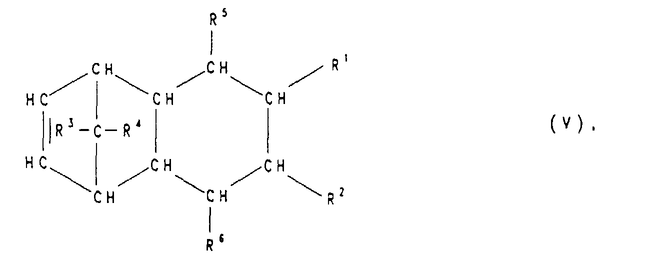 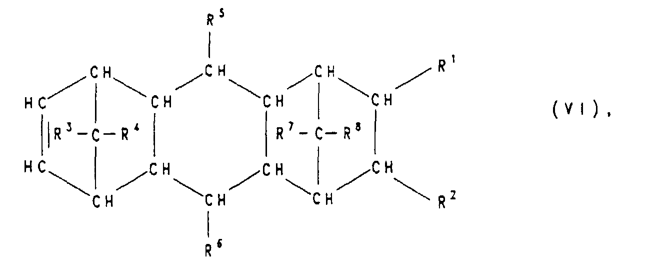 worin R¹, R², R³, R⁴, R⁵, R⁶, R⁷ und R⁸ gleich oder verschieden sind und ein Wasserstoffatom oder einen C₁-C₂₀-Kohlenwasserstoffrest bedeuten, oder zwei oder mehr Reste R¹-R⁸ einen Ring bilden und die Reste R¹-R⁸ in den verschiedenen Formeln I-VI eine unterschiedliche Bedeutung haben können,
0 bis 95 Gew.-% an Struktureinheiten, bezogen auf die Gesamtmasse des Cycloolefincopolymeren, die sich ableiten von einem oder mehreren monocyclischen Olefinen der Formel VII 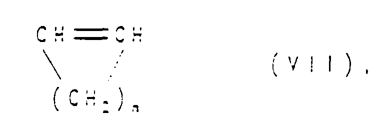 worin n eine Zahl von 2 bis 10 ist, und
0 bis 99 Gew.-% an Struktureinheiten, bezogen auf die Gesamtmasse des Cycloolefincopolymeren, die sich ableiten von einem oder mehreren acyclischen Olefinen der Formel VIII 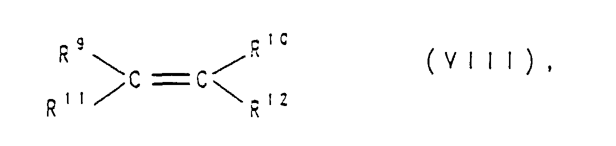 worin R⁹, R¹⁰, R¹¹ und R¹² gleich oder verschieden sind und ein Wasserstoffatom oder einen C₁-C₂₀-Kohlenwasserstoffrest bedeuten, und wobei die kern-Schale Partikeln zwischen 10 und 90 Volumen-% Kautschukphase und zwischen 90 und 10 Volumen-% Hartphase, bezogen auf das Gesamtvolumen der Partikel aufweist.

2. Verfahren zur Herstellung einer Polymer-Legierung nach Anspruch 1, dadurch gekennzeichnet, daß a) eines oder mehrere Cycloolefincopolymere und b) ein oder mehrere Typen von Kern-Schale-Partikeln mit einem Durchmesser von 0,01 bis 0,7 Mikrometer miteinander gemischt werden.

3. Verfahren gemäß Anspruch 2, dadurch gekennzeichnet,daß a) eines oder mehrere Cycloolefincopolymere und b) ein oder mehrere Typen von Kern-Schale-Partikeln mit einem Durchmesser von 0,01 bis 0,7 Mikrometer zu einem master batch gemischt werden und die resultierende Mischung mit eines oder mehreren Cycloolefincopolymeren gemischt wird.

4. Verwendung einer Polymer-Legierung, gemäß Anspruch 1, zur Herstellung von Formkörpern.

5. Formkörper, der eine Polymer-Legierung nach Anspruch 1 enthält, dadurch gekennzeichnet, daß die Polymer-Legierung enthält a) eines oder mehrere Cycloolefincopolymere und b) einen oder mehrere Typen von Kern-Schale-Partikeln mit einem Durchmesser von 0,01 bis 0,7 Mikrometer.

## Claims

1. A polymer alloy which comprises a) one or more cycloolefin copolymers and b) one or more types of core/shell particles having a diameter of 0.01 to 0.7 micrometer, the cycloolefin copolymer comprising
0.1 - 99% by weight of structural units, based on the total weight of the cycloolefin copolymer, which are derived from one or more polycyclic olefins,
0 to 95% by weight of structural units, based on the total weight of the cycloolefin copolymer, which are derived from one or more monocyclic olefins,
0 to 99% by weight of structural units, based on the total weight of the cycloolefin copolymer, which are derived from one or more acyclic olefins, the cycloolefin copolymer comprising 0.1 - 99% by weight of structural units, based on the total weight of the cycloolefin copolymer, which are derived from one or more polycyclic olefins of the formulae I, II, III, IV, V or VI 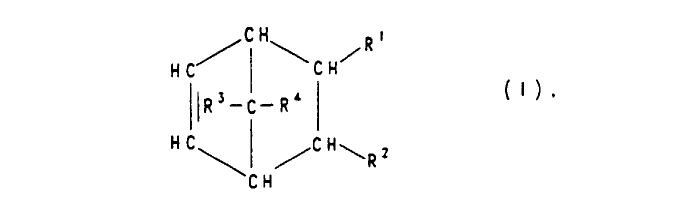 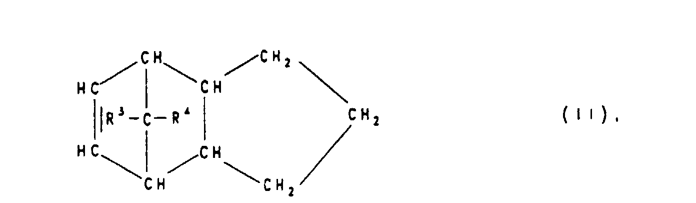 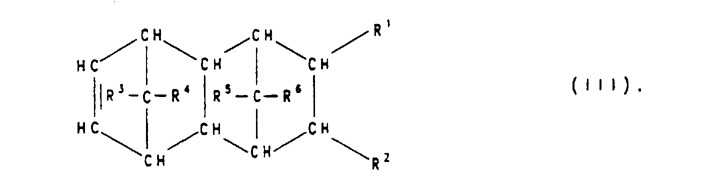 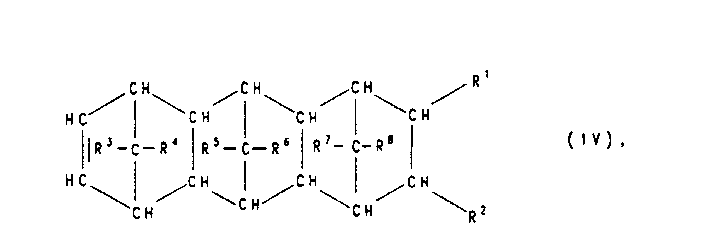 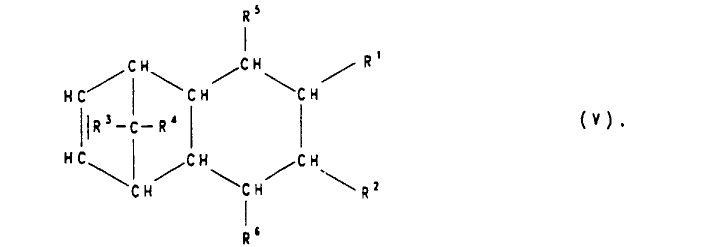 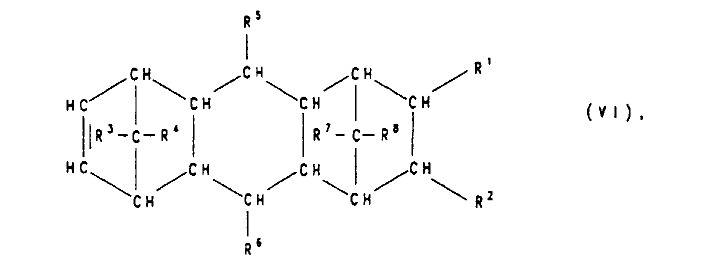 in which R¹, R², R³, R⁴, R⁵, R⁶, R⁷ and R⁸ are identical or different and are a hydrogen atom or a C₁-C₂₀ hydrocarbon radical, or two or more radicals R¹-R⁸ form a ring and it is possible for the radicals R¹-R⁸ in the various formulae I-VI to have a different meaning,
0 to 95% by weight of structural units, based on the total weight of the cycloolefin copolymer, which are derived from one or more monocyclic olefins of the formula VII 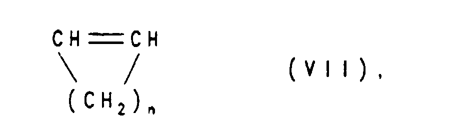 in which n is a number from 2 to 10, and
0 to 99% by weight of structural units, based on the total weight of the cycloolefin copolymer, which are derived from one or more acyclic olefins of the formula VIII 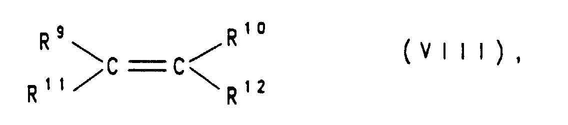 in which R⁹, R¹⁰, R¹¹ and R¹² are identical or different and are a hydrogen atom or a C₁-C₂₀ hydrocarbon radical, and the core/shell particles containing between 10 and 90% by volume of rubber phase and between 90 and 10% by volume of hard phase, on the total volume of the particles.

2. A process for the preparation of a polymer alloy as claimed in claim 1, which comprises mixing a) one or more cycloolefin copolymers and b) one or more types of core/shell particles having a diameter of 0.01 to 0.7 micrometer.

3. The process as claimed in claim 2, wherein a) one or more cycloolefin copolymers and b) one or more types of core/shell particles having a diameter of 0.01 to 0.7 micrometer are mixed to form a masterbatch and the resulting mixture is mixed with one or more cycloolefin copolymers.

4. The use of a polymer alloy as claimed in claim 1 for the production of shaped articles.

5. A shaped article which comprises a polymer alloy as claimed in claim 1, wherein the polymer alloy comprises a) one or more cycloolefin copolymers and b) one or more types of core/shell particles having a diameter of 0.01 to 0.7 micrometer.

## Revendications

1. Alliage polymère, caractérisé en ce qu'il contient a) un ou plusieurs copolymères de cyclooléfine, et b) un ou plusieurs types de particules à noyau et à enveloppe ayant un diamètre de 0,01 à 0,7 µm, dans lequel le copolymère de cyclooléfine contient 0,1-99% en poids de motifs structuraux, sur base de la masse totale des copolymères de cyclooléfine, qui dérivent d'une ou de plusieurs oléfines polycycliques;
0 à 95% en poids de motifs structuraux, sur base de la masse totale des polymères de cyclooléfine, qui dérivent d'une ou de plusieurs oléfines monocycliques;
0 à 99% en poids de motifs structuraux, sur base de la masse totale des polymères de cyclooléfine, qui dérivent d'une ou de plusieurs oléfines acycliques, dans lequel
0,1-99% en poids de motifs structuraux, sur base de la masse totale des copolymères de cyclooléfine, dérivent d'une ou de plusieurs oléfines polycycliques de formules I, II, III, IV, V ou VI, dans lesquelles R¹, R², R³, R⁴, R⁵, R⁶, R⁷ et R⁸ sont identiques ou différents et signifient un atome d'hydrogène ou un radical hydrocarboné en C₁-C₂₀, ou deux ou plus de radicaux R¹-R⁸ forment un cycle et les radicaux R¹-R⁸ peuvent avoir une signification différente dans les différentes formules I-VI; 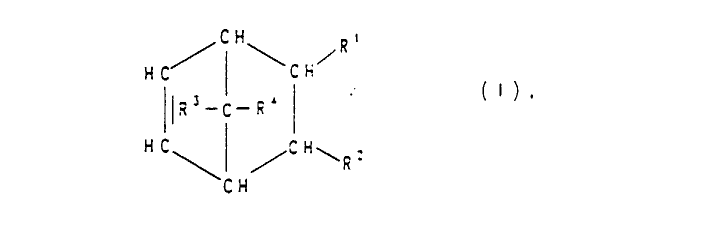 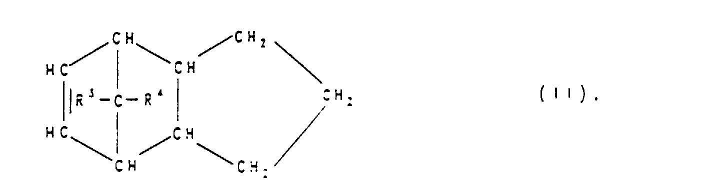 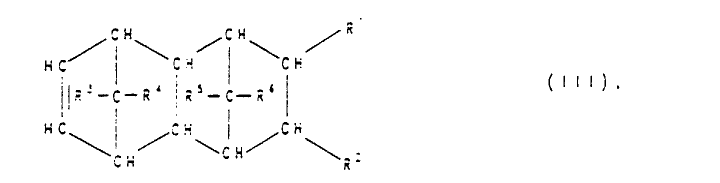 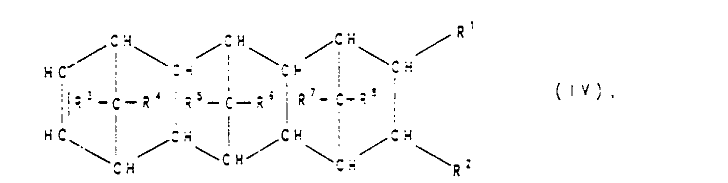 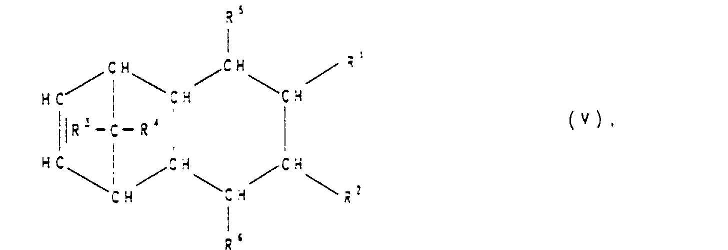 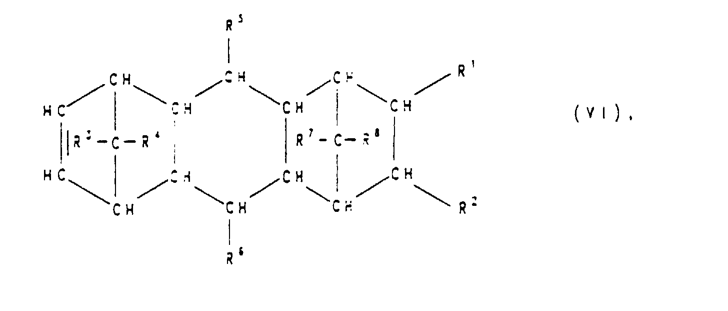
0 à 95% en poids de motifs structuraux, sur base de la masse totale des polymères de cyclooléfine, qui dérivent d'une ou de plusieurs oléfines monocycliques de formule VII 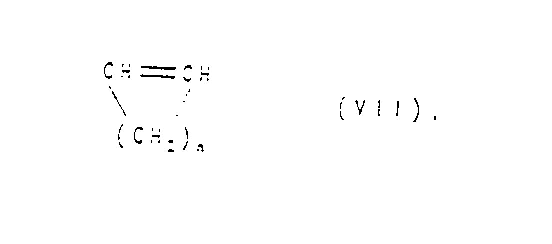 dans laquelle n est un nombre de 2 à 10, et
0 à 99% en poids de motifs structuraux, sur base de la masse totale des polymères de cyclooléfine, qui dérivent d'une ou de plusieurs oléfines acycliques de formule VIII 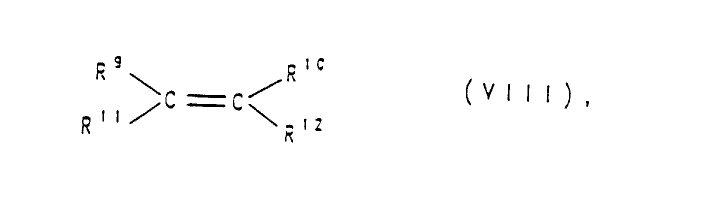 dans laquelle R⁹, R¹⁰, R¹¹ et R¹² sont identiques ou différents et signifient un atome d'hydrogène ou un radical hydrocarboné en C₁-C₂₀, et dans lequel les particules à noyau et à enveloppe présentent entre 10 et 90% en volume de phase caoutchouc et entre 90 et 10% en volume de phase dure, sur base du volume total des particules.

2. Procédé de préparation d'un alliage polymère suivant la revendication 1, caractérisé en ce qu'on mélange les uns avec les autres a) un ou plusieurs copolymères de cyclooléfine et b) un ou plusieurs types de particules à noyau et à enveloppe ayant un diamètre de 0,01 à 0,7 µm.

3. Procédé suivant la revendication 2, caractérisé en ce qu'on mélange a) un ou plusieurs copolymères de cyclooléfine et b) un ou plusieurs types de particules à noyau et à enveloppe ayant un diamètre de 0,01 à 0,7 µm en un mélange-maître et en ce que le mélange obtenu est mélangé avec un ou plusieurs copolymères de cyclooléfine.

4. Utilisation d'un alliage polymère suivant la revendication 1 pour la préparation de corps moulés.

5. Corps moulé qui contient un alliage polymère suivant la revendication 1, caractérisé en ce que l'alliage polymère contient a) un ou plusieurs copolymères de cyclooléfine et b) un ou plusieurs types de particules à noyau et à enveloppe ayant un diamètre de 0,01 à 0,7 µm.
